(19) Europäisches Patentamt
European Patent Office
Office européen des brevets

(11) **EP 3 575 784 B1**

(12) **EUROPEAN PATENT SPECIFICATION**

(45) Date of publication and mention
of the grant of the patent:
**27.01.2021 Bulletin 2021/04**

(51) Int Cl.:
*G01N 29/02* *(2006.01)*   *G01N 29/036* *(2006.01)*
*G01N 29/24* *(2006.01)*   *G01N 29/34* *(2006.01)*
*G02B 6/293* *(2006.01)*

(21) Application number: **18382364.0**

(22) Date of filing: **28.05.2018**

(54) **METHOD AND SYSTEM FOR THE ANALYSIS OF ANALYTES THROUGH MECHANICAL RESONANCE TRANSDUCTION**

VERFAHREN UND SYSTEM ZUR ANALYSE VON ANALYTEN MITTELS MECHANISCHER RESONANZSTRANSDUKTION

PROCÉDÉ ET SYSTÈME D'ANALYSE D'ANALYTES PAR TRANSDUCTION DE RÉSONANCE MÉCANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.12.2019 Bulletin 2019/49**

(73) Proprietor: **Consejo Superior de Investigaciones Científicas
(CSIC)
28006 Madrid (ES)**

(72) Inventors:
• **GIL SANTOS, Eduardo**
**28006 Madrid (ES)**
• **RUZ MARTINEZ, Jose Jaime**
**28006 Madrid (ES)**
• **MALVAR VIDAL, Oscar**
**28006 Madrid (ES)**
• **TAMAYO DE MIGUEL, Javier**
**28006 Madrid (ES)**
• **CALLEJA GOMEZ, Montserrat**
**28006 Madrid (ES)**

(74) Representative: **Temiño Ceniceros, Ignacio
Calle Amador de los Rios 1-1°
28010 Madrid (ES)**

(56) References cited:
**EP-A1- 3 067 723    EP-A1- 3 153 844
WO-A1-01/01121    US-A1- 2015 285 728**

• **LUBARSKY ET AL: "Hydration-dehydration of adsorbed protein films studied by AFM and QCM-D", BIOSENSORS AND BIOELECTRONICS, ELSEVIER SCIENCE LTD. UK, AMSTERDAM, NL, vol. 22, no. 7, 15 February 2007 (2007-02-15), pages 1275-1281, XP022022953, ISSN: 0956-5663, DOI: 10.1016/J.BIOS.2006.05.024**

**Description**

**FIELD OF THE INVENTION**

The present invention relates generally to methods that use small scale mechanical resonators for the detection of analytes, and more particularly to a method and system for analyte detection by using millimetre, micro and nanoscale mechanical resonators with vibration modes at high frequencies, in the order of magnitude of MHz or GHz. The method and system of the present invention allows the measurement of the mechanical resonance frequency of analytes such as bacteria, viruses or nanoentities. The main field of application of the invention is the technology of mechanical transducers based on microresonators.

**BACKGROUND OF THE INVENTION**

Since the invention of the Atomic Force Microscopy (AFM), sensors based on nanomechanical resonators have been developed for mass, stress, temperature or force detection. Typically, these devices and methods of detection are based on the measurement of changes in the mechanical resonance of the resonator attributed to the presence of the substance or particle that is to be detected.

Particularly, mass detectors have an extended use due to the simple theoretical models required to estimate the mass of an analyte from the changes in the mechanical resonance of a resonator when such mass is placed on it. In this particular case, the mechanical resonance of an oscillator (resonator) comes defined by the following expression:

$$\omega_{mec}^2 = \frac{m_{eff}}{k_{eff}} \quad \text{(Eq.1)}$$

Where $\omega_{mec}^2$ is the squared mechanical resonance of the resonator, $m_{eff}$ is the effective mass and $k_{eff}$ is the stiffness of the resonator. When the analyte is disposed on the resonator, the mechanical response and modes will change, because a change in the effective mass is produced and thus in its resonance frequency as $\Delta\omega_{mec}$:

$$\Delta\omega_{mec} = \frac{1}{2} m_{analyte} / m_{eff} \quad \text{(Eq.2)}$$

Such difference can be measured with the help of another external detector; that is, the use of any of the conventional optical and/or electrical methods of detection (beam deflection, interferometry, optomechanics, capacitive methods, electrostatic methods, etc.) Any of these methods use in the final step an oscilloscope, frequency locking, spectrum analyzer, high speed acquisition card, etc., for monitoring the mechanical resonance frequencies.

The aforementioned method of identification and quantification of cell building blocks, such as proteins and nucleic acids, by their mass is crucial for the discovery of new disease biomarkers enabling early disease detection and personalized medicine.

Even though rapid advancements in micro- and nanofabrication technologies have allowed researchers to miniaturize the resonators to achieve the ultimate mass detection limit, most of these results were obtained in high-vacuum conditions. Masses recorded rapidly evolved from the picogram ($10^{-12}$ g; mass of *Escherichia coli*), achieved with a microcantilever, to the yoctogram ($10^{-24}$ g; the proton mass), and achieved with a suspended carbon nanotube.

Translation of these achievements to liquids, the natural environment for biology, has remained elusive because of the very high energy loss in viscous environments. The energy loss is quantified by the quality factor Q, which is defined as the ratio between the resonance frequency and the width of the resonant peak, but effectively it represents the ratio between the stored mechanical energy and the energy loss during oscillations. The main source of dissipation in mechanical resonators comes from the viscous damping: the Q factor in liquids is at least three orders of magnitude lower than in vacuum.

To summarize, as soon as the analyte to be detected diminishes it size, some drawbacks arise:

1) The smaller the analyte, the smaller the change in the resonance frequency to detect. Thus, smaller mechanical resonators are required, in order to increase the sensitivity for nanoentity detection.

2) On the other hand, diminishing the size of the resonator hampers the detection of the vibration and mechanical resonance. Also, if the size of the resonator is too small, the amplitude of vibration of most resonators is significantly reduced when immersed in fluids, due to dissipation, being it more difficult and complex to detect these vibrations.

3) The most sensitive detection methods for vibration and analyte analysis are based on optomechanical devices. However, even such methods become limited when using resonators with dimensions below the visible wavelength (corresponding to sizes of the nanoscale). In this context, it is understand by non-optically measurable, the mechanical resonances from those resonators whose average dimensions, d, are under the wavelength, A, divided by 4n, being n the refraction index of the medium: d<λ/4n. Also, there would be non-optically measurable frequencies those of the resonators that are made from a material which optical properties are non-compatible (i.e. high absorbance or low reflectance).

On the other hand, it is understood by non-electrically measurable, the mechanical resonances from those resonators which are made from a material which electrical properties are non-compatible (i.e. isolator) or resonators immersed in certain fluids. As a consequence of the aforementioned criteria, it is understood by "measurable mechanical resonances" those frequency mechanical resonances from resonators that are optically and electrically measurable.

4) On the other hand, the miniaturization of mechanical resonators for analyte detection has shown that the presence of an analyte produces changes in the resonance frequency of the resonator not only due to the added mass, but also due to the stiffness of the analyte. Such parameters have been typically estimated through frequency changes:

$$\Delta\omega_{mec} = \frac{1}{2}m_{analyte}/m_{eff} + \frac{1}{2}k_{analyte}/k_{eff} \qquad (Eq.3)$$

In order to overcome the aforementioned difficulties for analyte detection, efforts have been focused on amplifying the signal of the microresonators, diminishing the mechanical dissipation or increasing the displacement sensitivity, for instance, through arrays of microresonators or even through theoretical models that determine the way resonators can be improved in shape, dimensions or materials. As an example, an optomechanical device based on semiconductor disks with a very low mass, acting as a mechanical resonator with radial modes has shown to oscillate in liquids efficiently for analyte detection.

However, given the reduced size of nanoparticles such as bacteria, viruses or proteins, more complex resonators will be necessary in order to perform ultrasensitive mass measurements with the proper detection accuracy in biological environments.

Given the above, there is still need of providing with a method of detection for nanoparticles and analytes, capable of univocally detect and identify an analyte even at the nanoscale size and/or if the system is immersed in a fluid.

Accordingly, there is a need of solutions allowing a further improvement of analyte detection. The present invention proposes a solution to said need by a novel method for analyte detection and analysis, based on the estimation of the resonance frequency of the analyte itself, which none of the prior art methods allows so far. Furthermore, the present invention provides with a solution that overcomes the aforementioned drawbacks, since it is based on the detection of the coupling of the mechanical vibration modes of the analyte with the mechanical vibration modes of the microresonator, thus not being based on measuring changes in the frequency of the resonator.

Even though there are some known approaches on this problem in the state of the art, such as patent applications WO 01/01121 A1, EP 3153844 A1, US 2015/285728 A1, EP 3067723 A1 or the article "Hydration-dehydration of adsorbed protein films studied by AFM and QCM-D" (Lubarsky *et al*.), none of them allows analyte detection and identification based on coupling the vibration mode of the analyte with the vibration mode of the mechanical resonator sensor.

It is thus an object of the present invention, although without limitation, to provide a method of mechanical resonance transduction for analyte detection or analysis, suitable for the estimation of the mechanical resonances of an analyte and to univocally identify analytes and nanoparticles even in fluids.

## BRIEF DESCRIPTION OF THE INVENTION

The object of the present invention relates, without limitation, to the development of a method of mechanical resonance transduction for analyte vibration detection according to claim 9, suitable for its use in the identification of bacteria, viruses, proteins or nanoparticles in the range of frequency between 1 MHz and 300 GHz. Advantageously, said method comprises the following steps:

a) disposing at least one analyte that is to be detected on at least one mechanical resonator sensor, wherein said analyte possesses at least one mechanical vibration mode and said mechanical resonator sensor possesses at least one measurable mechanical vibration mode selectable in one or more working frequencies;

b) monitoring the mechanical spectra of the coupled system conformed by the analyte and the mechanical resonator sensor;

c) selecting the working frequency of the mechanical vibration mode of the mechanical resonator sensor to approach the mechanical vibration mode of the analyte, until at least the mechanical vibration mode of the mechanical resonator sensor strongly couples with the mechanical vibration mode of the analyte, wherein the condition of strong coupling is fulfilled when the coupling constant k between the mechanical vibration mode of the mechanical resonator sensor and the mechanical vibration mode of the analyte is greater than $1/(3Q)$, where Q is the quality factor of the mechanical resonator sensor;

d) determining the frequency at which the strong coupling occurs from the mechanical spectra measured in step b);

e) estimating the resonance frequency and quality factor of the mechanical vibration mode of the analyte from the strong coupling frequency obtained in step d).

In that way, the method of the invention allows analyte detection and identification, based on the strong coupling between the vibration mode of the analyte and the vibration mode of the mechanical resonator sensor.

With the method of the invention, ultrasensitive mass detectors can be achieved but, more importantly, a new characterization technique is shown. New parameters related to nanoentities can be measured and, thus, a new door is opened for particle identification. Detecting vibration modes of bacteria, virus or protein can offer new possibilities for medicine development and treatment research.

A further object of the invention refers to a system for the analysis of analytes through mechanical resonance transduction according to claim 1, suitable for its use in the identification of cells, bacteria, virus, protein or nanoparticles in the range of frequency between 1 MHz and 300 GHz, said system comprising:

a) at least one mechanical resonator sensor comprising means for receiving at least one analyte disposed thereon, wherein said analyte possesses at least one mechanical vibration mode and said mechanical resonator sensor possesses at least one mechanical vibration mode selectable in one or more working frequencies;

b) means for monitoring the mechanical spectra of the coupled system conformed by said analyte and said mechanical resonator sensor;

c) means for selecting a working frequency of the mechanical vibration mode of the mechanical resonator sensor, such that the coupling constant k between the mechanical vibration mode of the mechanical resonator sensor and the mechanical vibration mode of the analyte is greater than $1/(3Q)$, where Q is the quality factor of the mechanical resonator sensor.

Preferred embodiments of the invention are defined in the dependent claims.

Thus, this invention allows obtaining a solution to the technical problem described in previous sections of the present document, offering a method and system for particle identification that univocally detects a nanoentity such as a bacterium, virus or protein. The method allows measurements in the natural environment in biology: liquids. The method is based on the vibration resonances of nanoentities and, more particularly, on the strong coupling detection and measurement between resonances of nanoentities and mechanical resonators. This method and system open a doorway for characterization techniques at very high frequencies.

## DESCRIPTION OF THE DRAWINGS

The characteristics and advantages of this invention will be more apparent from the following detailed description, when read in conjunction with the accompanying drawings, in which:

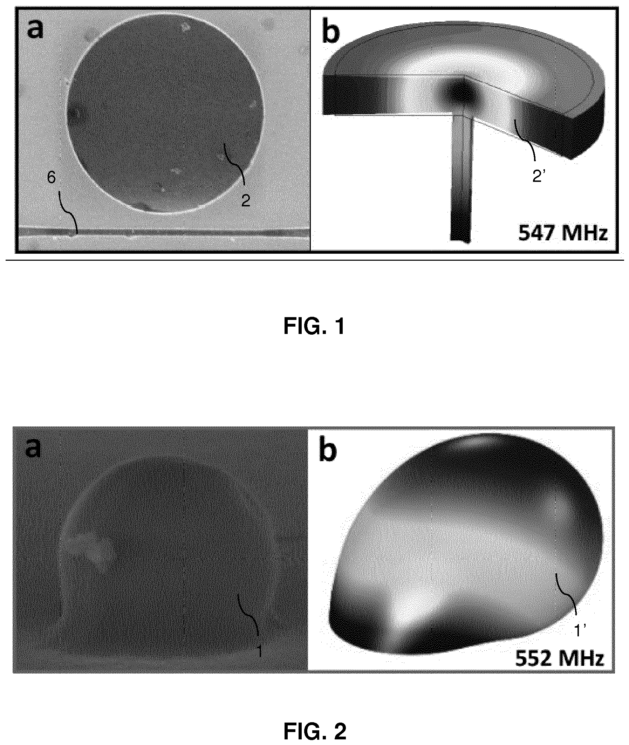

Figure 1A shows, according to a preferred embodiment of the invention, a top-view scanning electron microscopy (SEM) image of a microdisk resonator. Figure 1B shows a numerical simulation of the first radial breathing mode at 547 MHz of such resonator.

Figure 2A shows a scanning electron microscopy image of a staphylococcus bacterium (800 nm in diameter). Figure 2B shows a numerical simulation showing the deformation of the staphylococcus bacterium when vibrating on its first flexural mode, with a vibration mode around 552 MHz.

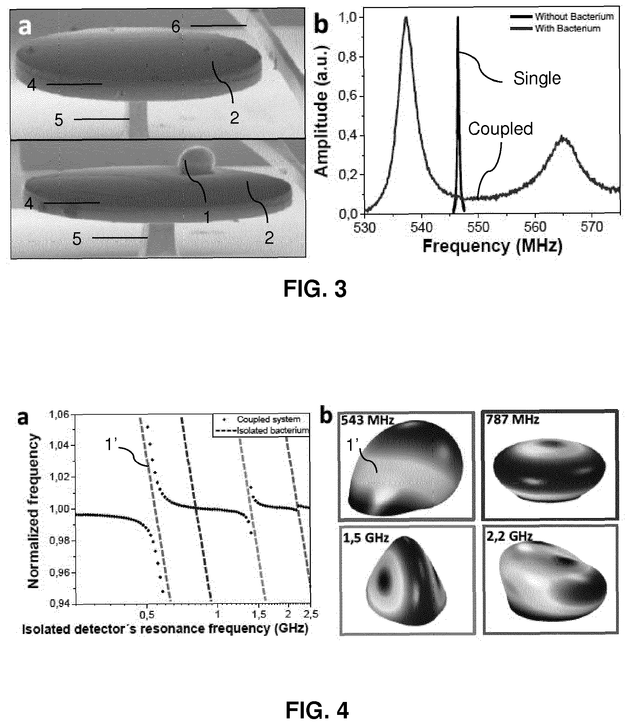

Figure 3A (top) shows a side view scanning electron microscopy image of a semiconductor disk, according to a preferred embodiment of the invention. Figure 3A (bottom) shows a side view scanning electron microscopy image of a semiconductor disk with a staphylococcus bacterium on top of it, according to a preferred embodiment of the invention. Figure 3B shows the mechanical spectra of a semiconductor microdisk before and after the adsorption of a staphylococcus bacterium, according to a preferred embodiment of the invention.

Figure 4A shows the normalized frequency (resonance frequency divided by the resonance frequency of the isolated mechanical resonator sensor or detector) of the coupled system and the isolated bacterium as a function of the resonance frequency of the isolated mechanical resonator sensor. Figure 4B shows simulated mode shape of four different mechanical modes of the bacterium showing their fundamental frequencies.

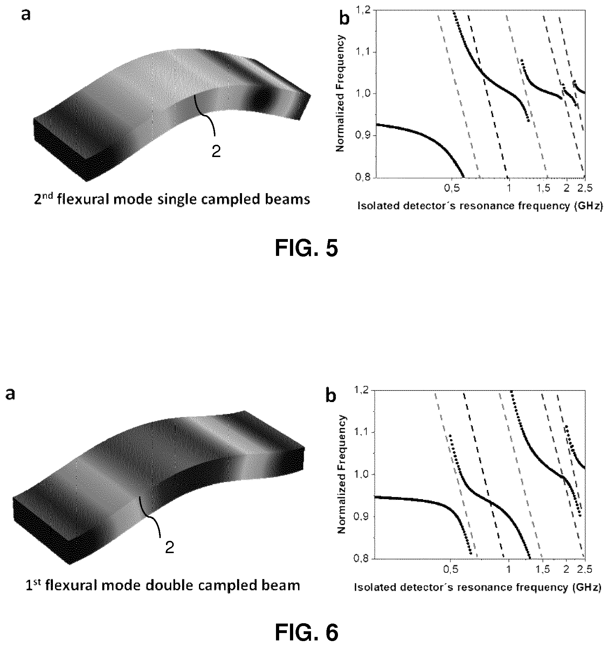

Figure 5A shows the simulated mode shape of the second flexural mode of a cantilever (mechanical resonator sensor or detector). Figure 5B shows the normalized frequency (resonance frequency divided by the resonance frequency of the isolated mechanical resonator sensor or detector) of the coupled system and the isolated bacterium as a function of the resonance frequency of the isolated mechanical resonator sensor.

Figure 6A shows the simulated mode shape of the first flexural mode of a bridge. Figure 6B shows the normalized frequency (resonance frequency divided by the resonance frequency of the isolated mechanical resonator sensor or detector) of the coupled system and the isolated bacterium as a function of the resonance frequency of the isolated mechanical resonator sensor.

## NUMERICAL REFERENCES USED IN THE DRAWINGS

In order to provide a better understanding of the technical features of the invention, the referred Figures 1-6 are accompanied of a series of numeral references which, with illustrative and non-limiting character, are hereby represented:

| (1) | Analyte |
|---|---|
| (1') | Mechanical vibration mode/s of the analyte |
| (2) | Mechanical resonator sensor |
| (2') | Mechanical vibration mode/s of the mechanical resonator sensor |
| (3) | External detector |
| (4) | Microdisk |
| (5) | Pedestal |
| (6) | Waveguide |

## DETAILED DESCRIPTION OF THE INVENTION

In the following description, for purposes of explanation and not limitation, details are set forth in order to provide a thorough understanding of the present invention. However, it will be apparent to those skilled in the art that the present invention may be practiced in other embodiments that depart from these details and descriptions without departing from the scope of the invention. Certain embodiments will be described below with reference to the drawings (Fig. 1-6) wherein illustrative features are denoted by reference numerals.

As described in previous sections, a main object of the invention is related to a method of mechanical resonance transduction for analyte detection and identification. The method is suitable for analytes with mechanical modes at high frequency range, typically between 1 MHz and 300 GHz. The invention is based on the effect of mechanical coupling between the analyte and the resonator wherein the analyte acts as a resonator itself.

According to the knowledge of the inventors of the present application, mechanical resonances of nanoentities such as bacteria, viruses or proteins have never been measured before. There are theoretical calculations for the range of frequencies where they must be located, with approximations that suggest that such vibration modes of bacteria, virus and protein, must be tiny oscillations that lie at MHz, GHz or at more than tens of GHz, respectively, due to their nanometric size.

In this context, the method of the present invention opens the door for a novel characterization technique that bases the detection and analyte (1) identification (in this document, the terms analyte, nanoentity, bacteria and particle will be treated as equivalent) on a coupling of the mechanical resonance of a (micro- or nano-) mechanical resonator sensor (2) and the mechanical resonance of the adsorbed analyte (1) (in this context, the mechanical resonator (2) is acting as a "sensor"). This coupling could be provided by any of the conventional coupling techniques such as, mechanical, optical, magnetic, capacitive, etc.

Generally, when two resonators are coupled through their frequency response and present collective modes, it is possible to extract information about the mechanical modes associated with the isolated structures by applying theoretical models. When applied to analytes (1), the conditions under which they can be detected though their mechanical resonances are typically the following:

- On one hand, it is necessary to know an approximate range where the analyte (1) possesses at least one mechanical vibration mode (1') (see Fig. 2).
- On the other hand, at least one mechanical resonator sensor (2) is needed, and it must possess at least one mechanical vibration mode (2'), tunable (or selectable) in a plurality of working frequencies (See Fig. 1).
- At least one mechanical vibration mode (2') of the mechanical resonator sensor (2) must lie in a similar frequency range from at least one mechanical vibration mode (1') of the analyte (1) in order for them to couple (See Fig. 3).
- The mechanical coupling between both modes (1', 2') must be a strong coupling.

In the conditions described above, the term "working frequencies" means that at least one vibration mode (2') can be tuned by other means (such as changing its stiffness, for instance, by adding stress) and shift it to other frequencies, conforming the plurality of working frequencies.

Also, the term "working frequencies" can also be referred to the situation where each one of the mechanical resonator sensors (2) (that is, one single mechanical resonator (2) or a set of mechanical resonators (2) acting as a sensor) has vibration modes at different frequencies, for example because they have different dimensions or are made by different materials. In that case, even without changing the intrinsic resonance frequency/ies of each mechanical resonator sensor (2), the one or the set of mechanical resonator sensors (2) covers a plurality of working frequencies and can be tuned or selected in one or more frequencies of such plurality by choosing or selecting one vibration mode.

Complementary to the term "working frequencies", the term "tunable" and the term "selectable" for one or more mechanical resonator sensors (2) can be referred in the present context as synonyms and to the following situations:

- an active tuning by changing the intrinsic resonance frequency/ies of a mechanical resonator sensor (2);
- choosing or selecting a vibration mode from a set of vibration modes at different frequencies of a mechanical resonator sensor (2);
- designing a mechanical resonator sensor (2) (material, dimensions, shape...) so it has a particular vibration mode (or modes) at a certain desired frequency (or frequencies).

The term "strong coupling" will be illustrated as follows: when two resonators are not coupled, it means that the two single resonance frequencies are too separate. In this particular case of uncoupling, that would mean that the mechanical mode (1') of the analyte (1) would not be detectable by itself while the mode (2') of the mechanical resonator (2) would be indeed detectable and would appear as a single resonance peak (see Fig. 3b), maybe slightly modified by the added mass and/or stiffness, as Eq. 2 and Eq. 3 dictate. In this situation, the mechanical resonator (2) acts as a typical mass/stiffness sensor.

However, when the two resonators (1, 2) are mechanically coupled, it means that instead of detecting one single resonance corresponding to the single mechanical resonator (2), there is a splitting in two peaks for the resonance frequency; that is, when the two resonators are *strongly* coupled, two peaks are clearly seen. In this situation both resonators are vibrating at the same resonance frequency, having two collective modes: symmetric and antisymmetric (see Fig. 3b).

By definition, the mechanical coupling is related with the difference between the mechanical frequency of the symmetric and the antisymmetric modes at the maximum coupling (when both resonance frequencies of the analyte (1) and the mechanical resonator (2) are identical):

$$\kappa = (\omega_A^2 - \omega_S^2)_{min}/2\,\omega_0^2 \quad (Eq.4)$$

where $\omega_0^2$ is the squared original frequency of the mechanical resonator (2), as well as of the analyte (1); $\kappa$ is the coupling strength or coupling constant; $\omega_S^2$ is the resonant frequency of the symmetric mode and $\omega_A^2$ is the resonant frequency of the antisymmetric mode.

In order to fulfil the *strong coupling* situation, the coupling constant $\kappa$ has a lower threshold of $\kappa > 1/(3Q)$, where $Q$ is the mechanical quality factor $Q=\omega_0$ /FWHM.

Therefore, in an embodiment of only one tunable mechanical resonator sensor (2) and one analyte (1) adsorbed on it, it is possible to estimate the resonance frequency of the analyte (1) through the frequency data of the coupling situation. That is, when the mechanical modes (1', 2') are perfectly matched in frequency, the distance between the two collective modes is minimized (Eq. 4). In this situation, dissipation of both collective modes is equal. Thus, by looking at the frequencies where this occurs, it is possible to infer the analyte's mechanical resonance frequencies (1') and dissipation. Note that there is no need of comparing the isolated resonance frequency (2') of the mechanical resonator sensor (2) with the coupling situation of the system, but just a single measurement is needed. This fact implies that the accuracy of the method is higher if compared with other analyte detection methods based on mass detection, because in the present case the measurement does not depend on the background (for example, if there is a lot of noise), while other methods must measure changes in the response of the mechanical resonator sensor (2).

This technique allows detecting the vibrations of micro and nanoscopic entities, such as bacteria, whose mechanical resonances have never been measured before, with extraordinary sensitivity, even accessing to their vibrations associated with the thermomechanical motion. Moreover, this technique can be exploited in order to develop ultrasensitive mass sensors based on mechanical structures composed by 'non-identical coupled resonators'.

On the other hand, the detection of the mechanical vibrations can be obtained through through an external detector (3); that is, the use of any of the conventional optical and/or electrical methods of detection (beam deflection, interferometry, optomechanics, capacitively, electrostatically, etc.) Any of these methods use in the final step an oscilloscope, frequency locking, spectrum analyzer, high speed acquisition card, etc., for monitoring the mechanical resonance frequencies.

Once the fundamentals have been presented, let us show some preferred embodiments of the invention.

In a preferred embodiment of the invention, only one mechanical resonator sensor (2) (or detector) is employed and at least one analyte (1) is adsorbed. In such situation, the method of mechanical resonance transduction for analyte (1) vibration detection comprises the steps according to claim 9.

It is understood in this context that the terms "coupled" system and "strong coupled" system are slightly different, according to the general physical nomenclature. As a consequence, "monitoring a coupled system" means in this context that the two or more resonators (1, 2) are not separately monitored, but as a whole system. However, the term strong coupling means a high level of coupling, as it has been previously explained.

In a preferred embodiment of the invention, the mechanical resonator sensor (2) is an optomechanical platform based on a semiconductor microdisk (4) and the analyte (1) is a staphylococcus bacterium. The sensitivity achieved comes from the using of semiconductor microdisks (4) as the mechanical resonator sensor (2) when injecting light on it. Such geometry, together with the material of the mechanical resonator sensor (2) provides with the high resonance frequency, capable of coupling with the analyte (1).

This is because semiconductor microdisks (4) support a family of mechanical modes in which they expand and contract radially (Radial breathing modes, RBM), which possess extremely high mechanical resonance frequencies, reaching the GHz range (Figure 1). Importantly, these vibrations can be easily detected thanks to the extraordinary sensitivity to motion detection provided by the optomechanical effects present on these structures. In brief, semiconductor microdisks (4) also support high quality optical modes where photons are trapped circulating around their periphery (Whispering gallery modes, WGM). The optical wavelength associated to a given optical mode strongly depends on the resonator's dimensions. As a consequence, when the microdisks (4) expand and contract radially, the optical wavelength change. By injecting light on a microdisk (4), using an external laser at a fixed wavelength close to an optical mode, mechanical vibrations modulate the transmitted light, allowing their precise detection. In addition, mechanical modes where the mechanical resonator sensor (2) oscillates in plane, such as RBM, use to show lower mechanical energy dissipation when immersed in fluids, than conventional out of plane modes, such as the flexural modes of a cantilever.

Optomechanical devices make an ideal platform for applying this novel technique, due to their high frequency mechanical modes, high displacement sensitivity and low mechanical dissipation.

In Figure 1A a top-view scanning electron microscopy image of a Gallium Arsenide microdisk with a radius of 2.5 microns and a thickness of 320 nm is shown. The microdisk (4) sits on an Aluminium Gallium Arsenide pedestal (5) with a height of 1.8 microns and a radius of 150 nm. An integrated and suspended waveguide (6) is placed close to the microdisk (4) to evanescently couple light on it. In Figure 1B, a numerical simulation shows the deformation of the microdisk (4) when vibrating on its first radial breathing mode. Anisotropy of the material is taken into account. The simulated mechanical resonance frequency, 547 MHz, is in excellent agreement with the experimental results.

By placing a staphylococcus bacterium (1) on a microdisk (4), mechanical modes of both entities can be coupled. The fact of being coupled or not, only depends on the separation of their mechanical resonances and the coupling strength that exists between them. In this case, coupling arise simply by mechanically contacting both resonators, however, other ways of coupling, such as optical, electrostatic or magnetic, could be applied. Importantly, mechanical coupling strength depends on the relative position of the bacterium (1) on the microdisk (4), as well as on the specific shape of their associated mechanical modes (1'). Fortunately, radial breathing modes (2') of microdisks (4) couple very efficiently with certain modes (1') of a bacterium (1). In addition, by designing the microdisks (4) properly, their mechanical resonances can be precisely matched to those (1') of the stapphylococus bacterium (1). If so, when depositing the bacterium (1) on the right position of the microdisk (4), mechanical modes (1', 2') of both entities get coupled (Figure 3). When this happen, instead of measuring a single resonance (2') associated with the radial breathing mode of the microdisk, two different mechanical resonances associated to the coupled system (Figure 3B) are observed (strong coupling). Note that both modes show significantly higher mechanical dissipation than when measuring the isolated microdisks (4).

By applying an analytical model together with the experimental data, we can determine not only the resonance frequency of the bacterium (1), $f_{bac}$=(552 $\pm$ 2) MHz, but also its mass, $m_{bac}$=(265 $\pm$ 20) fg, and its Young's modulus $E_{bac}$=(5.5 $\pm$ 0.5) MPa. Notably, the method allows measuring the intrinsic dissipation of the bacterium (1), a property that has been never measured before. Mechanical dissipation inside a material is usually translated into a complex value of the Young's Modulus, finally obtaining: $Imag(E_{bac})$=(0.22 $\pm$ 0.02) MPa.

Implications and applications of this novel technique are multiple and highly innovative. Resonators emerge as transducers of the mechanical resonances of micro and nanoscopic entities, such as bacteria, viruses and nanoparticles, with unprecedented sensitivity. This finding opens the way for the development of a completely novel characterization technique of such entities, based on the measurement of their mechanical resonances, as well as, on the identification of the entities through them, the mechanical spectrometry and spectroscopy.

The mechanical resonances that supports a structure, depends on its particular shape, as well as on its mechanical properties, such as, its Young's modulus, its density and its Poisson's coefficient. Consequently, the measurement of these mechanical frequencies, provide a unique mechanical fingerprint of the detected entity, allowing its univocal identification. Importantly, the present method for detecting these resonances requires that both, the mechanical resonance of the mechanical resonator sensor (2) and the one of the analyte (1) are similar (for instance, by tuning the mechanical resonator vibration modes (2') until one matches the analyte's mode (1')).

This novel technique is not restricted to the use of optomechanical devices. Any other mechanical resonator sensor (2) can be used as a sensor or detector as well, with the condition of supporting measurable mechanical modes (2') at very high frequency. As an example, lateral or extensional modes of conventional cantilever could also reach this frequency range if properly designed.

Indeed, the at least one mechanical resonator (2) can be in the shape of a cantilever, a bridge, a membrane, a drum, a capillary, a suspended microchannel, a plate, a disk, a toroid, or any other mechanically resonant structure, which possesses measurable mechanical modes by any existing conventional method, geometrically configured to present these mechanical modes in the range of MHz and/or GHz, to lie in the same frequency range than at least one mechanical vibration mode (1') of the analyte (1). Also, the vibration modes (1') of the at least one analyte (1) and the vibration modes of the at least one mechanical resonator (2) can be mechanically, magnetically, electrically, optically, capacitively or by other means coupled in a way that they present strong coupling in at least one frequency. (See Figures 5 and 6)

This requirement is needed because microscopic and nanoscopic entities, such as bacteria, virus and nanoparticles, possesses mechanical modes on this frequency range. As an example, the mechanical modes of a staphylococcus bacterium (1) lies in the hundreds of MHz range (Figure 2) and the one of a HIV virus in the GHz range. The technique can be further extended for the detection of even smaller entities, such as proteins, however it would be needed to access even higher frequencies mechanical modes.

In yet another preferred embodiment of the invention, the method comprises the using of two or more mechanical resonator sensors (2). The objective is to implement large bandwidth mechanical resonator sensors (2) in order to apply them for mechanical spectrometry and spectroscopy. In this preferred embodiment, the employed device consists on arrays of mechanical resonator sensors (2) with tiny different dimensions. This implementation presents an important disadvantage to the previous ones. Here, even if the whole system can access to a large bandwidth of frequencies, each mechanical resonator sensor (2) is a transducer of only a given mechanical frequency, therefore the bandwidth available for each individual event is limited.

In order to detect an analyte (1) in such discretised situation, in a preferred embodiment of the invention, several analytes (1) are disposed on several microdisks (4) (for instance, one analyte (1) on each microdisk (4)). Microdisks (4) are slightly different in dimensions, so their modes (2') are also different. The method would comprise the step of measuring the resonance frequencies of all the microdisks (4) with the analyte (1) and the one that shows a splitting in the resonance frequency would match the resonance frequency of the analyte (1). Therefore, it would be possible to estimate in this manner the vibration mode (1') of the analyte (1).

In yet another preferred embodiment of the invention, in order to circumvent the aforementioned problem, it is possible to use arrays of coupled resonators (2), identical or not. Coupled mechanical resonator sensors (2) possess collective modes (2') covering a wide range of frequencies, in which every individual resonator is vibrating. As a consequence, no matter where the analyte (1) is deposited, every event has access to the entire bandwidth of the system.

**Claims**

**1.** System for the analysis of analytes through mechanical resonance transduction, suitable for its use in the identification of cells, bacteria, virus, protein or nanoparticles in the range of frequency between 1 MHz and 300 GHz, wherein said system comprises:

a) at least one mechanical resonator sensor (2) comprising means for receiving at least one analyte (1) disposed thereon, wherein said analyte (1) possesses at least one mechanical vibration mode (1') and said mechanical resonator sensor (2) possesses at least one mechanical vibration mode (2') selectable in one or more working frequencies;

b) means for monitoring the mechanical spectra of the coupled system conformed by the analyte (1) and the mechanical resonator sensor (2);

c) means for selecting a working frequency of the mechanical vibration mode (2') of the mechanical resonator sensor (2), such that the coupling constant $\kappa$ between the mechanical vibration mode (2') of the mechanical resonator sensor (2) and the mechanical vibration mode (1') of the analyte (1) is greater than $1/(3Q)$, where $Q$ is the quality factor of the mechanical resonator sensor (2).

2. System according to the preceding claim, comprising two or more mechanical resonator sensors (2).

3. System according to the preceding claim, wherein the two or more mechanical resonator sensors (2) are non-identical in dimensions, materials or structure, having at least one different mechanical vibration mode (2').

4. System according to any of claims 2-3, wherein the two or more mechanical resonator sensors (2) are coupled and possess collective modes covering a bandwidth of frequencies.

5. System according to any of the preceding claims, wherein:

   - the at least one mechanical resonator sensor (2) is an optomechanical resonator in the shape of a microdisk (4) made of a semiconductor and lies on a pedestal (5), geometrically configured to present its mechanical vibration modes (2') lying between 1 MHz and 300 GHz, to lie in the frequency range relative to the mechanical vibration modes (1') of the at least one analyte (1);
   - the vibration modes (1') of the at least one analyte and the vibration modes (2') of the at least one mechanical resonator sensor (2) are mechanically, magnetically, electrically, optically or capacitively couplable so they present strong coupling in at least one frequency.

6. System according to the preceding claim, wherein:

   - the thickness of the at least one microdisk (4) lies between 200 and 400 nm, the radius of the microdisk (4) lies between 0.5 and 100 microns, the height of the pedestal (5) lies between 1 and 3 microns and its radius between 50 and 20000 nm;
   - the at least one microdisk (4) is made of Gallium Arsenide and the pedestal (5) is made of Aluminum Gallium Arsenide;
   - the system further comprises a suspended waveguide (6) placed at a distance between 100 to 300 nm to the at least one mechanical resonator (2) to evanescently couple light on it.

7. System according to any of claims 1-4, wherein at least one mechanical resonator sensor (2) is selected from the following: a resonator cantilever, a resonator bridge, a resonator membrane, a resonator drum, a resonator capillary, a suspended microchannel resonator, a resonator plate, a resonator disk, a resonator toroid, or any mechanically resonant structure, geometrically configured to present mechanical vibration modes (2') in the range of 1 MHz and 300 GHz.

8. System according to any of the preceding claims, wherein the at least one analyte (1) is a bacteria, a virus, a protein or a nanoparticle.

9. Method for the analysis of analytes through mechanical resonance transduction, suitable for its use in the identification of cells, bacteria, virus, protein or nanoparticles in the range of frequency between 1 MHz and 300 GHz, wherein said method comprises the use of a system according to any of claims 1-8 and the following steps:

   a) disposing at least one analyte (1) that is to be detected on at least one mechanical resonator sensor (2), wherein said analyte (1) possesses at least one mechanical vibration mode (1') and said mechanical resonator sensor (2) possesses at least one mechanical vibration mode (2') selectable in one or more working frequencies;

   b) monitoring the mechanical spectra of the coupled system conformed by the analyte (1) and the mechanical resonator sensor (2);

   c) selecting the working frequency of the mechanical vibration mode (2') of the mechanical resonator sensor (2) to approach the mechanical vibration mode (1') of the analyte (1), until at least the mechanical vibration mode (2') of the mechanical resonator sensor (2) strongly couples with the mechanical vibration mode (1') of the analyte (1), wherein the condition of strong coupling is fulfilled when the coupling constant $\kappa$ between the mechanical vibration mode (2') of the mechanical resonator sensor (2) and the mechanical vibration mode (1') of the analyte (1) is greater than $1/(3Q)$, where $Q$ is the quality factor of the mechanical resonator sensor (2);
d) determining the mechanical frequency at which the strong coupling occurs from the mechanical spectra measured in step b);
e) estimating the resonance frequency and quality factor of the mechanical vibration mode (1') of the analyte (1), from the strong coupling frequency determined in step d).

10. Method according to the preceding claim wherein the at least one vibration mode (2') of the at least one mechanical resonator sensor (2) is tunable by changing its mass or stiffness.

11. Method according to any of claims 9-10, wherein at least one of the mechanical resonator sensors (2) is immersed in liquid or air.

12. Method according to any of claims 9-11, wherein at least one analyte (1) is disposed on only one of the at least one mechanical resonator sensor (2).

13. Method according to any of claims 9-12, wherein the at least one analyte (1) is a bacteria, a virus, a protein or a nanoparticle.

14. Method according to any of claims 9-13, wherein the method further comprises the step of estimating the mass, the stiffness, the internal dissipation, the Poisson coefficient and the shape of the analyte (1) from the resonance frequency of step d).

**Patentansprüche**

1. System für die Analyse von Analyten durch mechanische Resonanztransduktion, geeignet für die Verwendung bei der Identifikation von Zellen, Bakterien, Viren, Proteinen und Nanopartikeln im Frequenzbereich zwischen 1 MHz und 300 GHz, wobei das System umfasst:

   a) mindestens einen mechanischen Resonatorsensor (2), umfassend Mittel zum Aufnehmen des mindestens eines Analyten (1), der darauf angeordnet ist, wobei der Analyt (1) mindestens einen mechanischen Schwingungsmodus (1') besitzt und der mechanische Resonatorsensor (2) mindestens einen mechanischen Schwingungsmodus (2") besitzt, der in einer oder mehreren Arbeitsfrequenzen wählbar ist;
   b) Mittel zum Überwachen der mechanischen Spektren des gekoppelten Systems, das durch den Analyten (1) und den mechanischen Resonatorsensor (2) ausgebildet wird;
   c) Mittel zum Auswählen einer Arbeitsfrequenz des mechanischen Schwingungsmodus (2') des mechanischen Resonatorsensors (2), so dass die Kopplungskonstante k zwischen dem mechanischen Schwingungsmodus (2') des mechanischen Resonatorsensors (2) und dem mechanischen Schwingungsmodus (1') des Analyten (1) größer als $1/(3Q)$ ist, wobei Q der Qualitätsfaktor des mechanischen Resonatorsensors (2) ist.

2. System nach dem vorstehenden Anspruch, umfassend zwei oder mehr mechanische Resonatorsensoren (2).

3. System nach dem vorstehenden Anspruch, wobei die zwei oder mehr mechanischen Resonatorsensoren (2) nicht identisch in ihren Abmessungen, Materialien oder Struktur sind und mindestens einen anderen mechanischen Schwingungsmodus (2') aufweisen.

4. System nach einem der Ansprüche 2 bis 3, wobei die zwei oder mehr mechanischen Resonatorsensoren (2) gekoppelt sind und kollektive Modi besitzen, die eine Frequenzbandbreite abdecken.

5. System nach einem der vorstehenden Ansprüche, wobei:

   - der mindestens eine mechanische Resonatorsensor (2) ein optomechanischer Resonator in Form einer Mikroscheibe (4) aus einem Halbleiter ist und auf einem Sockel (5) liegt, der geometrisch so konfiguriert ist, dass seine mechanischen Schwingungsmodi (2') zwischen 1 MHz und 300 Ghz liegen, um im Frequenzbereich relativ zu den mechanischen Schwingungsmodi (1') des mindestens einen Analyten (1) zu liegen;

- die Schwingungsmodi (1') des mindestens einen Analyten und die Schwingungsmodi (2') des mindestens einen Resonatorsensors (2) mechanisch, elektrisch, optisch oder kapazitiv koppelbar sind, sodass sie eine starke Kopplung in mindestens einer Frequenz präsentieren.

6. System nach dem vorstehenden Anspruch, wobei:

- die Dicke der mindestens einen Mikroscheibe (4) zwischen 200 und 400 nm liegt, der Radius der Mikroscheibe (4) zwischen 0,5 und 100 Mikrometer liegt, die Höhe des Sockels (5) zwischen 1 und 3 Mikrometer und ihr Radius zwischen 50 und 20000 nm liegt;
- die mindestens eine Mikroscheibe (4) aus Galliumarsenid hergestellt ist und der Sockel (5) aus Aluminiumgalliumarsenid hergestellt ist;
- das System ferner einen suspendierten Wellenleiter (6) umfasst, der in einem Abstand zwischen 100 und 300 nm zu dem mindestens einen mechanischen Resonator (2) angeordnet ist, um Licht darauf evaneszent zu koppeln.

7. System nach einem der Ansprüche 1 bis 4, wobei mindestens ein mechanischer Resonatorsensor (2) aus Folgendem ausgewählt ist: einem Resonatorausleger, einer Resonatorbrücke, einer Resonatormembran, einem Resonatorzylinder, einer Resonatorkapillare, einem suspendierten Mikrokanal-Resonator, einer Resonatorplatte, einer Resonatorscheibe, einem Resonatortoroid oder jeder beliebigen mechanischen resonanten Struktur, die geometrisch konfiguriert ist, um mechanische Schwingungsmodi (2') in dem Bereich von 1 Mhz und 300 Ghz zu präsentieren.

8. System nach einem der vorstehenden Ansprüche, wobei der mindestens eine Analyt (1) ein Bakterium, ein Virus, ein Protein oder ein Nanopartikel ist.

9. Verfahren für die Analyse von Analyten durch mechanische Resonanztransduktion, geeignet für die Verwendung bei der Identifikation von Zellen, Bakterien, Viren, Proteinen und Nanopartikeln im Frequenzbereich zwischen 1 MHz und 300 GHz, wobei das Verfahren die Verwendung eines Systems nach einem der Ansprüche 1 bis 8 und die folgenden Schritte umfasst:

a) Anordnen mindestens eines Analyten (1), der auf mindestens einem mechanischen Resonatorsensor (2) detektiert werden soll, wobei der Analyt (1) mindestens einen mechanischen Schwingungsmodus (1') besitzt und der mechanische Resonatorsensor (2) mindestens einen mechanischen Schwingungsmodus (2") besitzt, der in einer oder mehreren Arbeitsfrequenzen wählbar ist;
b) Überwachen der mechanischen Spektren des gekoppelten Systems, das durch den Analyten (1) und den mechanischen Resonatorsensor (2) ausgebildet ist;
c) Auswählen der Arbeitsfrequenz des mechanischen Schwingungsmodus (2') des mechanischen Resonatorsensors (2), um sich dem mechanischen Schwingungsmodus (1') des Analyten (1) zu nähern, bis mindestens der mechanische Schwingungsmodus (2') des mechanischen Resonatorsensors (2) stark mit dem mechanischen Schwingungsmodus (1') des Analyten (1) koppelt, wobei die Bedingung einer starken Kopplung erfüllt ist, wenn die Kopplungskonstante k zwischen dem mechanischen Schwingungsmodus (2') des mechanischen Resonatorsensors (2) und dem mechanischen Schwingungsmodus (1') des Analyten (1) größer als 1/(3Q) ist, wobei Q der Qualitätsfaktor des mechanischen Resonatorsensors (2) ist;
d) Bestimmen der mechanischen Frequenz, bei der die starke Kopplung von den mechanischen in Schritt b) gemessenen Spektren stattfindet;
e) Schätzen der Resonanzfrequenz und des Qualitätsfaktors des mechanischen Schwingungsmodus (1') des Analyten (1) von der starken in Schritt d) bestimmten Kopplungsfrequenz.

10. Verfahren nach dem vorhergehenden Anspruch, wobei der mindestens eine Schwingungsmodus (2") des mindestens einen mechanischen Resonatorsensors (2) durch Ändern seiner Masse oder Steifheit einstellbar ist.

11. Verfahren nach einem der Ansprüche 9 bis 10, wobei mindestens einer der mechanischen Resonatorsensoren (2) in Flüssigkeit oder Luft eingetaucht ist.

12. Verfahren nach einem der Ansprüche 9 bis 11, mindestens ein Analyt (1) nur auf einem des mindestens einen mechanischen Resonatorsensors (2) angeordnet ist.

13. Verfahren nach einem der Ansprüche 9 bis 12, wobei der mindestens eine Analyt (1) ein Bakterium, ein Virus, ein Protein oder ein Nanopartikel ist.

**14.** Verfahren nach einem der Ansprüche 9 bis 13, wobei das Verfahren ferner den Schritt des Schätzens der Masse, der Steifheit, der inneren Dissipation, des Poisson-Koeffizienten und der Form des Analyten (1) aus der Resonanzfrequenz von Schritt d) umfasst.

**Revendications**

**1.** Système d'analyse d'analytes par transduction de résonance mécanique, approprié pour son utilisation dans l'identification de cellules, de bactéries, de virus, de protéines ou de nanoparticules dans la plage de fréquences entre 1 MHz et 300 GHz, dans lequel ledit système comprend :

a) au moins un capteur à résonateur mécanique (2) comprenant des moyens pour la réception d'au moins un analyte (1) disposé dessus, dans lequel ledit analyte (1) possède au moins un mode de vibration mécanique (1') et ledit capteur à résonateur mécanique (2) possède au moins un mode de vibration mécanique (2') pouvant être sélectionné dans une ou plusieurs fréquences de travail ;
b) des moyens pour la surveillance du spectre mécanique du système couplé conformé par l'analyte (1) et le capteur à résonateur mécanique (2) ;
c) des moyens pour la sélection d'une fréquence de travail du mode de vibration mécanique (2') du capteur à résonateur mécanique (2), de sorte que la constante de couplage k entre le mode de vibration mécanique (2') du capteur à résonateur mécanique (2) et le mode de vibration mécanique (1') de l'analyte (1) est supérieur à 1/(3Q), où Q est le facteur de qualité du capteur à résonateur mécanique (2).

**2.** Système selon la revendication précédente, comprenant deux ou plusieurs capteurs à résonateur mécanique (2).

**3.** Système selon la revendication précédente, dans lequel les deux ou plusieurs capteurs à résonateur mécanique (2) ne sont pas identiques en dimensions, matériaux ou structure, ayant au moins un mode de vibration mécanique différent (2').

**4.** Procédé selon l'une quelconque des revendications 2 à 3, dans lequel les deux ou plusieurs capteurs à résonateur mécanique (2) sont couplés et possèdent des modes collectifs couvrant une bande passante de fréquences.

**5.** Système selon l'une quelconque des revendications précédentes, dans lequel :

- l'au moins un capteur à résonateur mécanique (2) est un résonateur optomécanique en forme de microdisque (4) fait de semi-conducteur et repose sur un socle (5), géométriquement configuré pour présenter ses modes de vibration mécanique (2') compris entre 1 MHz et 300 GHz, pour être compris dans la plage de fréquences par rapport aux modes de vibration mécanique (1') de l'au moins un analyte (1) ;
- les modes de vibration (1') de l'au moins un analyte et les modes de vibration (2') de l'au moins un capteur à résonateur mécanique (2) sont mécaniquement, magnétiquement, électriquement, optiquement ou capacitivement couplables de sorte à présenter un couplage fort dans au moins une fréquence.

**6.** Système selon la revendication précédente, dans lequel :

- l'épaisseur de l'au moins un microdisque (4) est comprise entre 200 et 400 nm, le rayon du microdisque (4) est compris entre 0,5 et 100 microns, la hauteur du socle (5) est comprise entre 1 et 3 microns et son rayon entre 50 et 20 000 nm ;
- l'au moins un microdisque (4) est fait d'arséniure de gallium et le socle (5) est fait d'arséniure d'aluminium et de gallium ;
- le système comprend en outre un guide à ondes suspendu (6) placé à une distance comprise entre 100 et 300 nm à l'au moins un résonateur mécanique (2) pour coupler de manière évanescente la lumière à celui-ci.

**7.** Procédé selon l'une quelconque des revendications 1 à 4, dans lequel au moins un capteur à résonateur mécanique (2) est choisi parmi les suivants : un cantilever résonateur, un pont résonateur, une membrane résonatrice, un tambour résonateur, un capillaire résonateur, un résonateur à microcanaux suspendu, une plaque résonatrice, un disque résonateur, un toroïde résonateur, ou toute structure mécaniquement résonnante, géométriquement configuré pour présenter des modes de vibration mécanique (2') dans la plage de 1 MHz et 300 GHz.

**8.** Système selon l'une quelconque des revendications précédentes, dans lequel l'au moins un analyte (1) est une bactérie, un virus, une protéine ou une nanoparticule.

9. Procédé d'analyse d'analytes par transduction de résonance mécanique, approprié pour son utilisation dans l'identification de cellules, de bactéries, de virus, de protéines ou de nanoparticules dans la plage de fréquences entre 1 MHz et 300 GHz, dans lequel ledit procédé comprend l'utilisation d'un système selon l'une quelconque des revendications 1 à 8 et les étapes suivantes :

> a) disposer au moins un analyte (1) qui doit être détecté sur au moins un capteur à résonateur mécanique (2), dans lequel ledit analyte (1) possède au moins un mode de vibration mécanique (1') et ledit capteur à résonateur mécanique (2) possède au moins un mode de vibration mécanique (2') pouvant être sélectionné dans une ou plusieurs fréquences de travail ;
> b) surveiller le spectre mécanique du système couplé conformé par l'analyte (1) et le capteur à résonateur mécanique (2) ;
> c) sélectionner la fréquence de travail du mode de vibration mécanique (2') du capteur à résonateur mécanique (2) pour approcher le mode de vibration mécanique (1') de l'analyte (1), jusqu'à ce qu'au moins le mode de vibration mécanique (2') du capteur à résonateur mécanique (2) se couple fortement avec le mode de vibration mécanique (1') de l'analyte (1), dans lequel la condition de couplage fort est remplie lorsque la constante de couplage $k$ entre le mode de vibration mécanique (2') du capteur à résonateur mécanique (2) et le mode de vibration mécanique (1') de l'analyte (1) est supérieur à $1/(3Q)$, où $Q$ est le facteur de qualité du capteur à résonateur mécanique (2) ;
> d) déterminer la fréquence mécanique à laquelle le couplage fort se produit à partir des spectres mécaniques mesurés à l'étape b) ;
> e) estimer la fréquence de résonance et le facteur de qualité du mode de vibration mécanique (1') de l'analyte (1), à partir de la fréquence de couplage fort déterminée à l'étape d).

10. Procédé selon la revendication précédente dans lequel l'au moins un mode de vibration (2') de l'au moins un capteur à résonateur mécanique (2) peut être réglé en modifiant sa masse ou sa rigidité.

11. Procédé selon l'une quelconque des revendications 9 à 10, dans lequel au moins l'un des capteurs à résonateur mécanique (2) est immergé dans un liquide ou de l'air.

12. Procédé selon l'une quelconque des revendications 9 à 11, dans lequel au moins un analyte (1) est disposé sur un seul de l'au moins un capteur à résonateur mécanique (2).

13. Procédé selon l'une quelconque des revendications 9 à 12, dans lequel l'au moins un analyte (1) est une bactérie, un virus, une protéine ou une nanoparticule.

14. Procédé selon l'une quelconque des revendications 9 à 13, dans lequel le procédé comprend en outre l'étape consistant à estimer la masse, la raideur, la dissipation interne, le coefficient de Poisson et la forme de l'analyte (1) à partir de la fréquence de résonance de l'étape d).

**FIG. 1**

**FIG. 2**

**FIG. 3**

**FIG. 4**

a

2

2$^{nd}$ flexural mode single campled beams

b

Isolated detector's resonance frequency (GHz)

**FIG. 5**

a

2

1$^{st}$ flexural mode double campled beam

b

Isolated detector's resonance frequency (GHz)

**FIG. 6**

**EP 3 575 784 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0101121 A1
- EP 3153844 A1
- US 2015285728 A1
- EP 3067723 A1